Europäisches Patentamt

European Patent Office

Office européen des brevets

(11) Veröffentlichungsnummer: **0 483 779 A1**

## (12) EUROPÄISCHE PATENTANMELDUNG

(21) Anmeldenummer: **91118460.4**

(22) Anmeldetag: **30.10.91**

(51) Int. Cl.5: **A01K 83/06**

(30) Priorität: **02.11.90 DE 9015121 U**
**17.11.90 DE 9015748 U**
**20.06.91 DE 9107601 U**

(43) Veröffentlichungstag der Anmeldung:
**06.05.92 Patentblatt 92/19**

(84) Benannte Vertragsstaaten:
**AT BE CH DE DK ES FR GB IT LI LU NL SE**

(71) Anmelder: **Scheiter, Dieter**
**Herborner Strasse 43**
**W-6334 Asslar(DE)**

(72) Erfinder: **Scheiter, Dieter**
**Herborner Strasse 43**
**W-6334 Asslar(DE)**

(74) Vertreter: **Riecke, Manfred**
**Neuköllner Strasse 8**
**W-6333 Braunfels(DE)**

(54) **Raubfischködersystem.**

(57) Es wird ein Raubfischködersystem (Angelgerät) beschrieben, das im wesentlichen aus einer Stange (1) besteht, die in den Köderfisch einschiebbar ist, und die mit einer Stechöse (7,9), einer Hauptöse (8,10) und einer Kiemenöse (4) zum Einhängen der entsprechenden Fanghaken versehen ist. Die Stange (1) ist im Bereich der Kiemenöse (4) nach außen durchgebogen, so daß alle Fanghaken (15,16,17) von außen einhängbar sind. Infolge der Durchbiegung und eventuell vorgesehener Haken (15,16,17) und Widerhaken sitzt die Stange fest im Köderfisch (14), so daß das ganze Ködersystem beim Angeln weit ausgeworfen werden kann, ohne daß die Gefahr besteht, daß sich Köderfisch (14) und Haken (15,16,17) zueinander verschieben oder gar voneinander lösen. Eine schneidenartige Ausbildung der Stangenenden und deren Zuspitzung erleichtert das Einschieben der Stange (1) in den Köderfisch (14). An die Stange (1) sind bereits bekannte Zusatzgeräte ansetzbar, insbesondere an das vordere Stangenende eine Schaufel, die aber auch bereits ab Herstellerwerk fest mit der Stange verbunden sein kann. In einer besonderen Ausführungsform ist die Stange (1) längsverstellbar gemacht und kann daher speziell an die Länge des Köderfisches (14) angepaßt werden.

Fig. 1

Die Erfindung betrifft ein Raubfischködersystem, das zur Verwendung als Angelgerät bestimmt ist.

Derartige Ködersysteme bisheriger Bauart weisen z.B. mehrere aneinander gekoppelte Drillingshaken auf, die zusammen mit einem Befestigungselement entlang einem toten Köderfisch oder einem Kunststoff-Fisch angebracht sind. Im einfachsten Falle werden zwei große und ein kleiner Haken miteinander verbunden und an einem Metallseil in den toten Köderfisch aingehängt.

Solche Verbindungen haben sich jedoch stets als sehr instabil erwiesen und erlauben oft nicht ein weites Auswerfen des Ködersystems, weil sich dabei in vielen Fällen die Verbindung von Haken und Köderfisch entweder ganz löst oder sonstwie in Unordnung gerät.

Der Erfindung liegt die Aufgabe zugrunde, ein Raubfischködersystem zu schaffen, bei dem eine hohe Haltefestigkeit zwischen Köderfisch und Haken gegeben ist, so daß ein einheitliches Raubfischködersystem entsteht, das weit ausgeworfen werden kann, ohne sich dabei aufzulösen, und das gleichzeitig in verschiedenen Variationen des Angelns verwendet werden kann.

Diese Aufgabe ist durch ein Raubfischködersystem gelöst, das die in Anspruch 1 angegebenen Merkmale aufweist. Gemäß diesen Merkmalen besteht das erfundene Ködersystem aus einer in ihrer Länge dem Köderfisch angepaßten Stange, die an einem Ende mit einer Stechöse, im Mittelteil in Höhe der Kiemen mit einer seitlich angebrachten Kiemenöse und am anderen Ende mit einer Hauptöse versehen ist. In diese ösen sind dann Fanghaken verschiedener Form, Anzahl und Größe von außen einhängbar, wobei die Stange im Bereich der Kiemenöse quer zu ihrer Längsrichtung nach außen abgekröpft bzw. durchgebogen ist, damit auch die Kiemenöse gut von außen einhängbar ist.

Durch die Anbringung der verschiedenen Fanghaken in allen ösen ist sichergestellt, daß der vom Raubfisch erfaßte Köder an allen gewünschten Seiten mit Fangvorrichtungen versehen ist.

Durch das Einführen der Stange in den Körper des toten Köderfisches bzw. in einen Kunststofffisch ist eine besonders stabile Verbindung zwischen Stange und Köder gewährleistet, die es ermöglicht, das gesamte System weit auszuwerfen, ohne Gefahr zu laufen, daß sich Köderfisch und Haken voneinander lösen bzw. in Unordnung geraten.

Zum leichteren Einführen der Stange in den Köderfisch können die Stangenenden schneidenartig abgeflacht sein, und zur Erhöhung der Haltefestigkeit zwischen System und Köderfisch kann die Stange mit Widerhaken bzw. Einsetzhaken versehen sein.

Während die Stange am vorderen und hinteren Ende mit mindestens je einer Bohrung versehen ist, welche die Stechöse bzw. die Hauptöse darstellen, in die die Fanghaken eingehängt werden, werden für die Kiemenöse zwei verschiedene Ausführungsformen vorgeschlagen. Es kann entweder die Stange ebenfalls mit einer Bohrung versehen sein, in die ein bewegliches Teil eingehängt ist, das beim Einschieben und Herausziehen nach vorn und rückwärts kippbar ist, und in das der eigentliche Fanghaken eingehängt wird; es kann die Stange aber auch in einer zweiten Ausführungsform mit einem seitlich abstehenden Lappen mit Bohrung versehen sein, in die dann ebenfalls der Haken einghänbar ist. Dieser Lappen ist dann etwa rechtwinklig zu den schneidenartigen Abflachungen der Stangenenden angesetzt.

Wesentlich an dem erfundenen Ködersystem ist, daß in allen Ausführungsformen die Haken von außen an die Stange und damit an den Köderfisch angehängt werden können. Dadurch lassen sich die Haken oder ein Vorfach leicht in einer solchen Weise einhängen, daß verschiedene Arten von Angeln möglich sind.

In diesem Zusammenhang wird darauf verwiesen, daß die Stange mit allen bekannten Zusatzgeräten verbunden werden kann. Dies gilt insbesondere für eine an sich bekannte Schaufel, wie sie zum Angeln in wechselnden Tiefen benutzt wird. Eine solche Schaufel kann z.B. bereits bei der Herstellung der Stange vorne mit der Stange fest verbunden werden, und zwar mit unterschiedlichen Neigungen. Es können aber auch an der Stange bzw. an der Schaufel Klemmittel vorgesehen werden, die es gestatten, die Schaufel bei Bedarf unter verschiedenen Winkeln mit der Stange nachträglich fest zu verbinden.

Zusätzlich wird noch vorgeschlagen, in einer besonderen Ausführungsform, die Stange in zwei Teilstangen zu unterteilen, die teleskopartig ineinanderschiebbar und damit an die Länge des Köderfisches speziell anpassbar sind. In der eingestellten Länge sind die Teilstangen dann z.B. durch eine Stiftschraube fest verbindbar. Durch diese Längenverstellung der Stange können die außen am Köderfisch befestigten Haken oder das Vorfach genauestens plaziert werden.

In der Zeichnung ist die Erfindung in mehreren Ausführungsbeispielen dargestellt. Es zeigen:

Fig. 1 schematisch die den Hauptteil des erfundenen Raubfischködersystems bildende Stange in einer ersten Ausführungsform in Draufsicht,

Fig. 2 die Stange der Fig.1 in Ansicht aus Pfeilrichtung A,

Fig. 3 schematisch die den Hauptteil des erfundenen Raubfischködersystems bildende Stange in einer zweiten Ausführungsform in Draufsicht,

Fig. 4 die Stange der Fig.3 in Ansicht aus Pfeilrichtung B,

Fig. 5 schematisch die Stange in einer dritten Ausführungsform mit einstellbarer Stangenlänge,

Fig. 6 schematisch die Anordnung der Stange und der Fanghaken in Verbindung mit einem Köderfisch.

In den Figuren ist mit 1 die Stange bezeichnet, die den Hauptteil des erfundenen Raubfischködersystems darstellt. In allen Ausführungsformen ist die Stange 1 im Bereich 2 quer zur Stangen-Längsrichtung durchgekröpft bzw. durchgebogen. An dieser durchgebogenen Stelle sind Löcher bzw. Lappen angebracht, in welche die Kiemenhaken einhängbar sind.

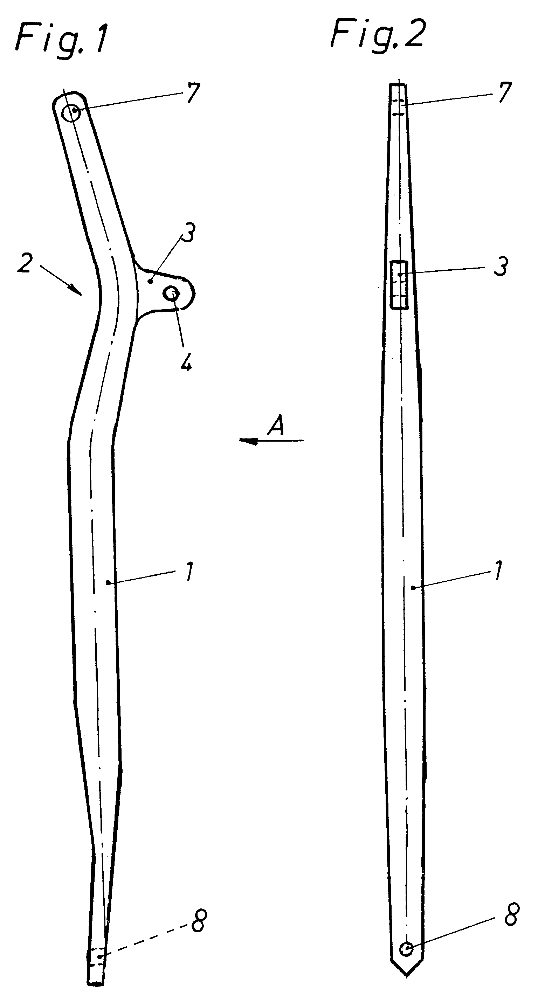

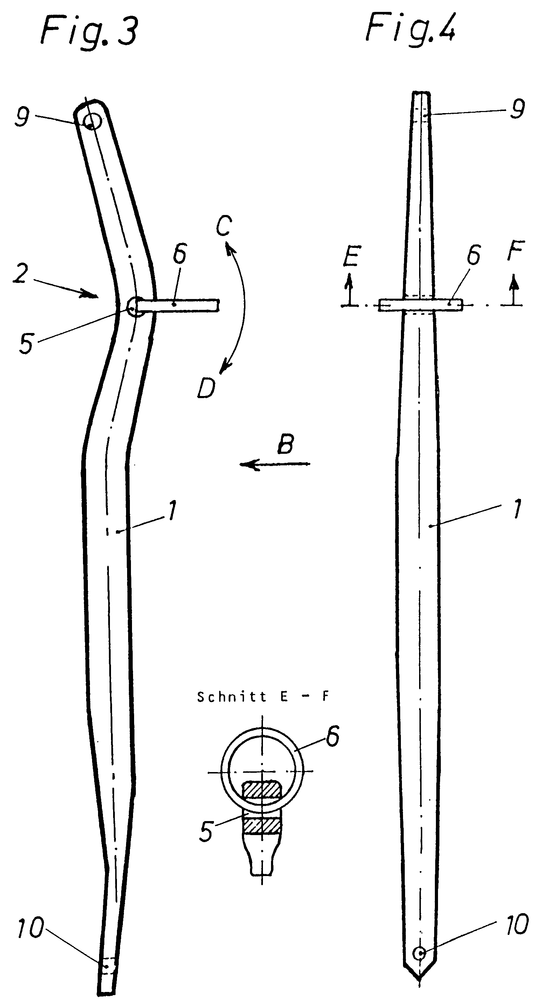

In dem Ausführungsbeispiel gemäß den Fig.3 u. 4 ist im Bereich 2 in der Stange eine Bohrung 5 angebracht, in die ein Teil 6 - im vorliegenden Ausführungsbeispiel ein Ring - beweglich eingehängt ist. D.h. beim Einschieben und Herausziehen der Stange 1 aus dem Köderfisch kann das Teil 6 in Pfeilrichtung C-D kippen und bietet daher beim Verschieben der Stange im Köderfisch nur geringen Widerstand. In das Teil 6 ist dann ebenfalls, wie im Ausführungsbeispiel der Fig.1;2 der Kiemenhaken von außen eingehängt.

In diesem Ausführungsbeispiel gemäß den Fig. 1 u. 2 ist im Bereich 2 ein Lappen 3 angesetzt mit einem Loch 4, in das der Kiemenhaken eingehängt wird.

In allen Ausführungsbeispielen sind die vorderen und hinteren Enden der Stange 1 schneidenartig abgeflacht und gegebenenfalls zugespitzt, wie sich dies aus den Fig. 1-4 deutlich erkennen läßt. Diese Enden sind ebenfalls mit Löchern 7-10 (= Hauptösen und Stechösen) versehen, in die von außen die Fanghaken eingehängt werden.

Wie bereits erwähnt, kann die Stange 1 auch vorne mit einer Schaufel versehen sein; entweder fest ab Herstellerwerk; oder nachträglich ansetzbar, z.B. anklemmbar mittels geeigneter Klemmittel.

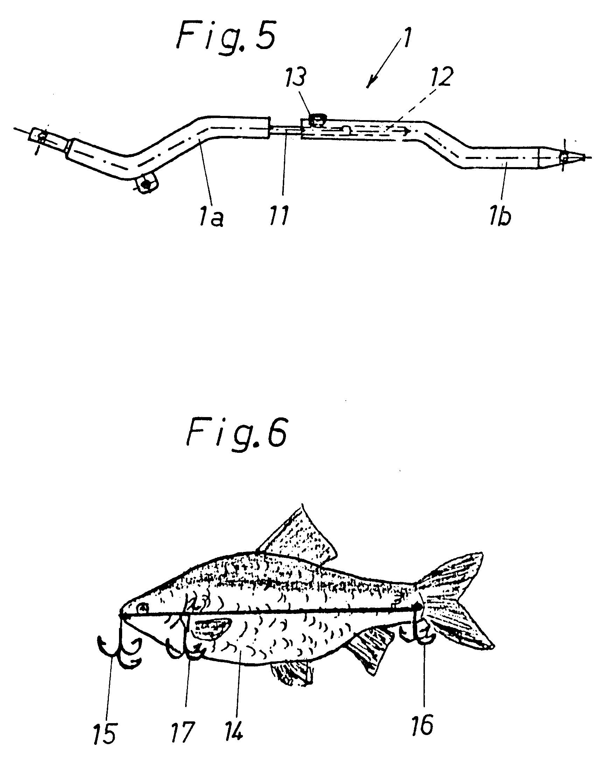

Im Ausführungsbeispiel gemäß Fig.5 ist die Stange 1 längenverstellbar gemacht und kann demzufolge an die jeweilige Länge des Köderfisches speziell angepaßt werden. Zu diesem Zwecke ist die Stange 1 in die Teile 1a und 1b unterteilt, wobei das Teil 1a mit einem Stiftansatz 11 versehen ist, der in eine axiale Bohrung 12 des Teiles 1b paßt und in dieser längsverschiebbar ist. Mit einer Feststellschraube 13 kann der Stiftansatz 11 in der gewünschten Länge der Stange 1 in der Bohrung 12 festgestellt werden, so daß die beiden Teile 1a;1b eine durchgehende Stange 1 in der erforderlichen Länge bilden. Wie aus Fig.5 ersichtlich, kann das Teil 1b zusätzlich ebenfalls noch durchgebogen sein, was aber nicht erfindungswesentlich ist. Teil 1b könnte durchaus auch gerade ausgeführt sein, wie dies bei den anderen gezeigten Ausführungsbeispielen der Fall ist.

Fig.6 veranschaulicht die Anbringung der Stange 1 in einem Köderfisch 14. In die Stechöse und in die Hauptöse sowie die Kiemenöse sind jeweils Fanghaken 15,16,17 eingehängt. Die Durchbiegung der Stange 1 im Bereich 2, die wesentlich dafür ist, daß der Fanghaken 17 als Kiemenhaken in die Kiemenöse von außen einhängbar ist, erstreckt sich in dieser Darstellung senkrecht zur Zeichenebene und ist somit nicht erkennbar.

**Patentansprüche**

1. Raubfischködersystem zum Einführen in einen toten Köderfisch oder in einen Kunststoff-Fisch, dadurch gekennzeichnet, daß das System aus einer in der Länge dem Köderfisch angepaßten Stange (1) besteht, die an einem Ende mit mindestens einer Stechöse (7;9), im Mittelteil in Höhe der Kiemen mit mindestens einer seitlich angebrachten Kiemenöse (4;6), und am anderen Ende mit mindestens einer Hauptöse (8;10) versehen ist, in welche ösen Fanghaken ((15;16;17) verschiedener Form, Anzahl und Größe einhängbar sind.

2. Raubfischködersystem nach Anspruch 1, dadurch gekennzeichnet, daß die beiden Stangenenden mit den ösen (7-10) schneidenartig abgeflacht und/oder zugespitzt sind, und daß ein die Kiemenöse (4) enthaltender Lappen (3) etwa rechtwinklig zu den Abflachungen an der Stange (1) angesetzt ist.

3. Raubfischködersystem nach den Ansprüchen 1 und 2, dadurch gekennzeichnet, daß die Stange (1) in Kiemenhöhe (Bereich 2) quer zu ihrer Längsrichtung derart durchgebogen ist, daß der Lappen (3) mit der Kiemenöse (4) deutlich nach außen vorsteht.

4. Raubfischködersystem nach Anspruch 1, dadurch gekennzeichnet, daß die Stange (1) in Kiemenhöhe (Bereich 2) quer zu ihrer Längsrichtung durchgebogen und mit einer Bohrung (5) versehen ist, in die ein Teil (6) beweglich eingehängt ist, das in Schieberichtung nach vorne und hinten kippbar ist.

5. Raubfischködersystem nach Anspruch 4, dadurch gekennzeichnet, daß das bewegliche Teil (6) ein Ring ist, und daß die Anlenkung an die Stange (1) durch das Einhängen des Ringes in das quer zu deren Längsrichtung verlaufende Loch (5) geschieht.

6. Raubfischködersystem nach den Ansprüchen 1 - 5, dadurch gekennzeichnet, daß zur Erhöhung der Haltefestigkeit zwischen System und Köderfisch die Stange (1) mit Widerhaken bzw. Einsetzhaken versehen ist.

7. Raubfischködersystem nach den Ansprüchen 1 - 6, dadurch gekennzeichnet, daß die Stange (1) in zwei Teilstangen (1a;1b) unterteilt ist, die teleskopartig (11;12) ineinander schiebbar und in der Länge des Köderfisches feststellbar sind.

8. Raubfischködersystem nach Anspruch 7, dadurch gekennzeichnet, daß die Feststellvorrichtung aus einer quer zur Stangenlängsachse wirkenden Feststellschraube (13) besteht.

9. Raubfischködersystem nach den Ansprüchen 1 - 8, dadurch gekennzeichnet, daß die Stange (1) am vorderen Ende mit einer an sich bekannten Schaufel versehen ist, die entweder ab Herstellerwerk angebracht oder bei Bedarf mittels geeigneter Befestigungsmittel ansetzbar ist.

Fig.1

Fig.2

A

# Fig.3

# Fig.4

Schnitt E - F

# Fig. 5

# Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-3 284 945 (KURTIS) <br> * das ganze Dokument * <br> --- | 1 | A01K83/06 |
| Y | US-A-2 093 954 (CHILCOTT) <br> * Seite 1, rechte Spalte, Zeile 24 - Zeile 49; Abbildungen 6-8 * <br> --- | 1 | |
| A | FR-A-977 270 (HUMBERT) <br> * das ganze Dokument * <br> --- | 1,2,6 | |
| A | US-A-3 760 525 (DAUGHTRY) <br> * das ganze Dokument * <br> --- | 1,2 | |
| P,X | DE-U-9 107 601 (SCHEITER) <br> * das ganze Dokument * <br> --- | 1,4,5 | |
| P,X | DE-U-9 015 748 (SCHEITER) <br><br> * das ganze Dokument * <br> --- | 1,2,3,7, 8 | |
| A | FR-A-1 282 130 (DE MONTRICHARD) <br> * das ganze Dokument * <br> --- | 9 | **RECHERCHIERTE SACHGEBIETE (Int. Cl.5)** |
| A | FR-A-741 382 (PERROT) <br> * das ganze Dokument * <br><br> ----- | 9 | A01K |

Der vorliegende Recherchenbericht wurde für alle Patentansprüche erstellt

| Recherchenort | Abschlußdatum der Recherche | Prüfer |
|---|---|---|
| DEN HAAG | 28 JANUAR 1992 | VERDOODT S.J.M. |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
Dokument

EPO FORM 1503 03.82 (P0403)